# EUROPEAN PATENT APPLICATION

(11) **EP 1 406 189 A2**
(43) Date of publication of application: **07.04.2004**
(21) Application number: 03022553.6
(22) Date of filing: 02.10.2003
(51) Int. Cl.: G06F 17/50

(54) **Information communication system and client apparatus**

(30) Priority: 03.10.2002 JP 2002291216
(71) Applicant: Kabushiki Kaisha Toshiba, Tokyo 105-8001 (JP)
(72) Inventor: Ozasa, Kenji, Minato-ku Tokyo 105-8001 (JP); Kazuyuki, Matsuda, Minato-ku Tokyo 105-8001 (JP)
(74) Representative: Henkel, Feiler & Hänzel

(57) **Abstract**

In a communication system in which a plurality of client apparatuses (B, C, D, ...) individually having CAD software are connected via a network to a server (A) managing information, information on a notation created on a CAD file screen of an arbitrary client apparatus is transmitted to the server (A). The notation information transmitted to the server (A) is recorded on a recording medium. Further, the notation information is transmitted to one or more client apparatuses as destinations of the notation information. Thus, the transmitted notation information is displayed on a CAD file screen of each client apparatus as destinations.

## Description

The present invention relates to a communication system, a client apparatus, and an information communication method, and in particular, to a communication system in which a plurality of client apparatuses individually having computer aided design (CAD) software are connected via a network to a server apparatus managing information and the like.

Three-dimensional CAD software is known as a tool for using CAD to create a three-dimensional model. In general, the three-dimensional CAD software has a notation function. The notation function creates a notation at an arbitrary position in a three-dimensional model on a screen that has been modeled by the three-dimensional CAD software. If designers use this function to exchange information such as a change in a design with each other, they create a notation and save a CAD file containing this notation. The designer hands this file to another designer whom the first designer desires to read the notation. Then, the second designer can read the notation by opening the file.

It should be noted that the designers cannot collaborate unless they exchange data created by a single CAD, with each other and that data on a created notation cannot be read without using CAD software because this data is contained in data created by the CAD software.

In connection with the three-dimensional CAD, what is called a "three-dimensional CAD viewer" or a "collaboration tool" is known. The three-dimensional CAD viewer is a tool which does not have such advanced functions as those of the three-dimensional CAD but which converts three-dimensional CAD data into its own data format so that a model can be displayed so as to have the same shape as that created using the three-dimensional CAD. The collaboration tool enables a plurality of people to share the same file through a network using the functions of the three-dimensional viewer and to add notations to their screens.

Further, various methods are known which are used to design CAD drawings efficiently. For example, Jpn. Pat. Appln. KOKAI Publication No. 2000-305973 discloses a technique used in an automatic designing method of allowing a client to design CAD screens wherein a server is provided with a required processing section to enable the creation of notated leader lines. Further, Japanese Patent No. 2765312 discloses a printed circuit board designing apparatus that causes an operation procedure managing section to transmit only coordinate data on a wiring pattern additionally inputted by an arbitrary terminal, to another terminal to enable parallel designing with the same display. Furthermore, Japanese Patent No. 2790558 discloses a technique of providing a plurality of terminals each of which modifies an original drawing to obtain a modified drawing and allowing a host to synthesize modified portions from the respective terminals so that the terminals can display a common modified screen.

In the prior art, if for example, the design of a model is to be changed, the model, including a part to be changed, is displayed on a three-dimensional CAD screen and then printed on paper. Then, the contents of the change are drawn on the printed drawing. On the basis of this sheet, a person responsible for the design of this part uses three-dimensional CAD software to open a file for this part. Then, this person changes the model on the three-dimensional CAD screen.

Thus, although a design is created and changed using three-dimensional CAD software, paper must be used to communicate parts to be changed. Within the same section of a company, a designer can hand the sheet directly to a responsible staff member and orally describe the contents of the change or give instructions while viewing a screen with this member. However, if the responsible staff member works apart from the designer, a facsimile or telephone must be used for communications. If it is thus impossible to give direct instructions, the part to be changed may not be accurately communicated.

Further, if information on a change in a model is exchanged using paper, this paper must be stored. When the contents of the change are to be checked, there is no other way but to look at this paper (it is impossible for a plurality of people to look at the paper at a time).

On the other hand, it is contemplated that the previously described collaboration tool may be used to exchange design change information or the like. However, the collaboration tool is not used by the designer. Accordingly, some additional operation becomes necessary: in order to obtain design change information, the designer or another person may have to convert data created by CAD or to allow the system to execute an automated conversion. Other problems are that design change information exchanged using the collaboration tool cannot be utilized directly in the three-dimensional CAD and that both CAD software and collaboration tool must be simultaneously used.

Further, software products already exist which allow a plurality of users to exchange notations added to a model on a collaboration tool created using a viewer or the like. Such software requires the users to convert a data format for CAD software used for design into an appropriate one. Thus, disadvantageously, the designer must use plural pieces of software such as the viewer and the CAD. Further, information on what notations have been added remains only on the viewer. Therefore, a CAD file containing an actual design model cannot be referred to for this information.

Embodiments of the present invention may provide a communication system, a client apparatus, and an information communication method that enable design change information or the like to be efficiently exchanged.

According to one aspect of the present invention, there is provided an information communication method applied to a communication system in which a plurality of client apparatuses individually having computer aided design (CAD) software are connected via a network to a server apparatus managing information, the method comprising transmitting notation information related to a notation created on a CAD file screen of an arbitrary client apparatus, to the server apparatus; recording the notation information transmitted to the server apparatus, on a recording medium and transmitting the notation information to one or more client apparatuses as destinations of the notation information; displaying the notation information transmitted to each client apparatus as the destinations, on a CAD file screen of each client apparatus as the destinations.

According to another aspect of the present invention, there is provided a communication system comprising a plurality of client apparatuses individually having computer aided design (CAD) software; a server apparatus managing information; and a network connecting the plurality of client apparatuses and the server, wherein each of the plurality of client apparatuses is configured to transmit notation information related to a notation created on a CAD file screen to the server apparatus and configured to display, on the CAD file screen, the notation information transmitted from the server apparatus, and the server apparatus is configured to record the notation information transmitted by an arbitrary client apparatus, on a recording medium and configured to transmit the notation information to one or more client apparatuses as destinations of the notation information.

According to still another aspect of the present invention, there is provided a client apparatus having computer aided design (CAD) software and which can transmit and receive information to and from another client via a server apparatus, the apparatus comprising a first processing section configured to transmit notation information related to a notation created on a CAD file screen to one or more client apparatuses as destinations of the notation information via the server apparatus; and a second processing section configured to display, on the CAD file screen, the notation information transmitted from an arbitrary client apparatus via the server apparatus.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing a configuration of a communication system common to embodiments of the present invention;
FIG. 2 is a diagram showing an example of model and notation information displayed on a screen of a client;
FIG. 3 is a diagram illustrating items contained in the notation information;
FIGS. 4A and 4B are diagrams showing that different model shapes are displayed on the screens of respective clients;
FIG. 5 is a diagram illustrating the case in which clients dealing with different model shapes transmit notation information between them;
FIG. 6 is a diagram showing a configuration of a communication system according to a first to tenth embodiments of the present invention;
FIG. 7 is a block diagram showing a functional configuration of a server according to the first embodiment of the present invention;
FIG. 8 is a block diagram showing a functional configuration of a client according to the first embodiment;
FIG. 9 is a flowchart illustrating operations of a communication system according to the first embodiment;
FIG. 10 is a block diagram showing a functional configuration of the server according to a second embodiment of the present invention;
FIG. 11 is a block diagram showing a functional configuration of the client according to the second embodiment;
FIG. 12 is a flowchart illustrating operations of the communication system according to the second embodiment;
FIG. 13 is a block diagram showing a functional configuration of the server according to a third embodiment of the present invention;
FIG. 14 is a block diagram showing a functional configuration of the client according to the third embodiment;
FIG. 15 is a flowchart illustrating operations of the communication system according to the third embodiment;
FIG. 16 is a flowchart illustrating operations of the communication system according to a fourth embodiment of the present invention;
FIG. 17 is a block diagram showing a functional configuration of the client according to a fifth embodiment of the present invention;
FIG. 18 is a flowchart illustrating operations of the communication system according to the fifth embodiment;
FIG. 19 is a block diagram showing a functional configuration of the client according to a seventh embodiment;
FIG. 20 is a block diagram showing the relationship between the server and a Web page according to an eighth embodiment of the present invention;
FIG. 21 is a chart showing a process procedure according to a ninth embodiment of the present invention;
FIG. 22 is a block diagram showing a functional configuration of the client according to a tenth embodiment of the present invention; and
FIG. 23 is a flowchart illustrating operations of the communication system according to the tenth embodiment.

Embodiments of the present invention will be described below with reference to the drawings.

### <Common to Each Embodiment>

First, description will be given of items common to each embodiment before describing the individual embodiments.

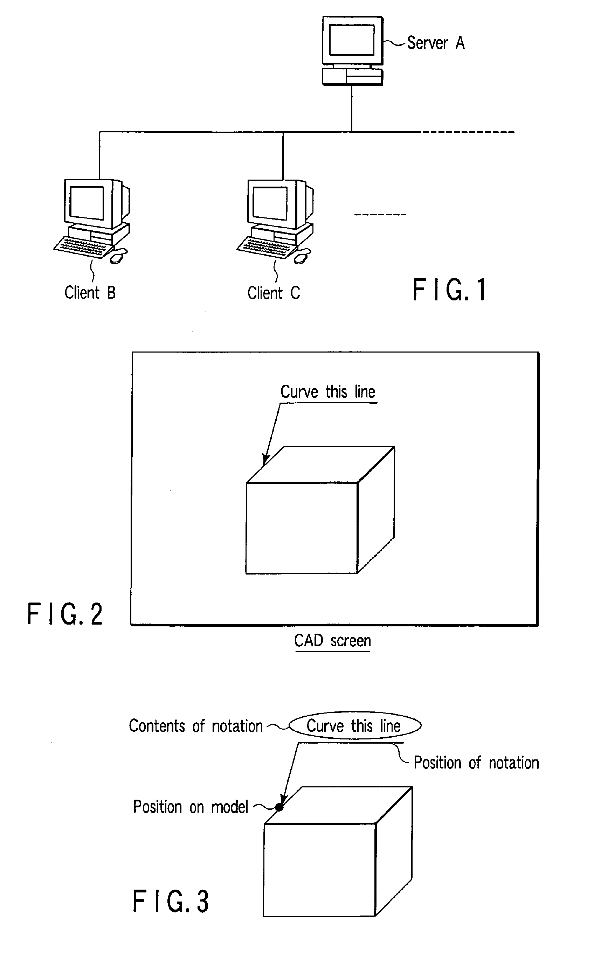

FIG. 1 is a diagram showing a configuration of a communication system common to embodiments of the present invention.

In the communication system in the figure, a server apparatus A (hereinafter referred to as a "server A") is connected to a plurality of client apparatuses B, C, ... (hereinafter referred to as "clients B, C, ...") via a network.

The server A has a function of recording and managing information on each client, information transmitted between the clients, and other information and transferring information transmitted by an arbitrary client, to a destined client as a destination of the information.

The clients B, C, ... are individually provided with three-dimensional CAD software to enable a three-dimensional model to be created on a CAD screen of a display device. The three-dimensional CAD software has a notation function. The notation function enables a notation (a sentence indicative of a change in a design or the like) to be created at an arbitrary position in a three-dimensional model on a CAD screen which has been modeled by three-dimensional CAD software.

In particular, each client has a function of transmitting information on a notation created on a CAD file screen, from this client to another client via the server A and a function of displaying notation information transmitted from another client to this client via the server, on the CAD file screen.

FIG. 2 is a diagram showing an example of model and notation information displayed on a screen of a client.

For example, it is assumed that a plurality of clients are simultaneously opening a particular CAD file (for example, client name: "CUBE"). Here, on a certain client (for example, the client B), a user uses the notation function to create notation information at an arbitrary position in a model. The created notation information includes the contents of the notation, the coordinates of the position of the notation, and the coordinates of a position indicated by the notation (e.g., a position on the model) as shown in FIG. 3.

Once the user has created the notation information in this manner, the client B transmits this information to the server A (in this case, the CAD file itself is not transmitted). Thus, the server A transmits the notation information to the clients other than the client B (i.e. all the clients sharing the CAD file "CUBE"). Then, the notation is displayed on a screen for the CAD file "CUBE" (the same display as that in FIG. 2) .

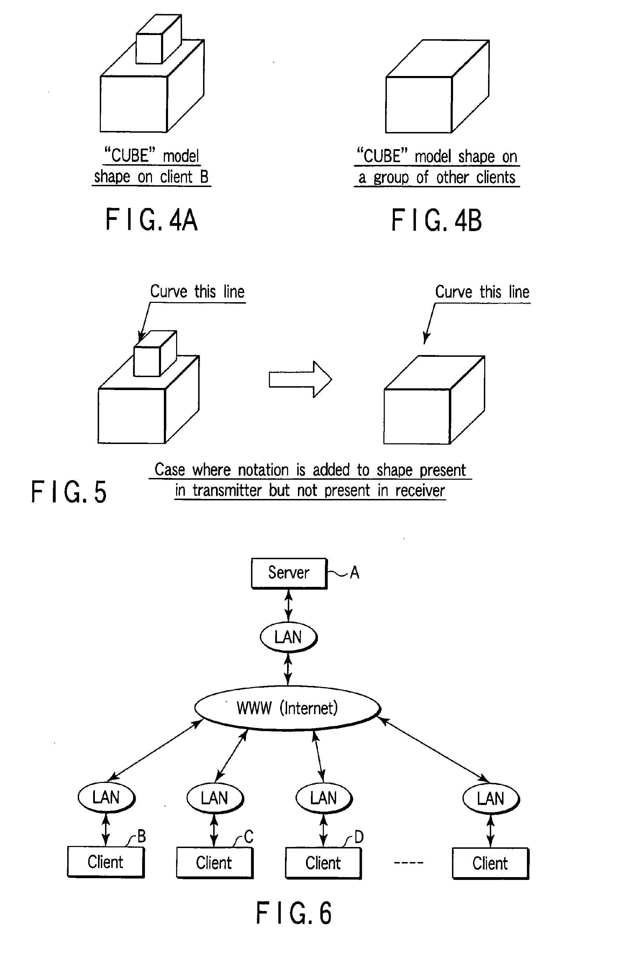

FIGS. 4A and 4B are diagrams showing that different models are displayed on the screens of respective clients.

It is assumed that the three-dimensional model displayed on the screen for the CAD file "CUBE" varies among the clients. For example, it is assumed that a model such as that shown in FIG. 4A is displayed on the client B, while a model such as that shown in FIG. 4B is displayed on the client C. In this case, the model on the client B has a shape that is absent from the model on the client C.

Here, information on a notation created by the client B is transmitted from the client B to the client C (via the server A). In this case, as shown in FIG. 5, on the screen of the client C, the notation information is also displayed at the same arrangement position as that on the screen of the client B.

Specifically, as shown in FIG. 5, if a position to be indicated by a notation does not correspond to the same position on a model on a receiving client, the notation is not displayed on the model but at a particular position on the screen. This enables notation information to be appropriately communicated to a client creating a differently shaped model without causing any problems during the transmission or reception of the notation information.

### <First Embodiment>

FIG. 6 is a diagram showing a configuration of a communication system according to a first embodiment of the present invention. Elements common to FIG. 1 are denoted by the same reference numerals.

As shown in FIG. 6, the server A is connected to a LAN, and the clients B, C, D, ... are individually connected to respective LANs. Further, the individual LANs can be connected together via a Web such as the Internet. The clients transmit and receive information to and from one another via the LANs, the Web, and the server A.

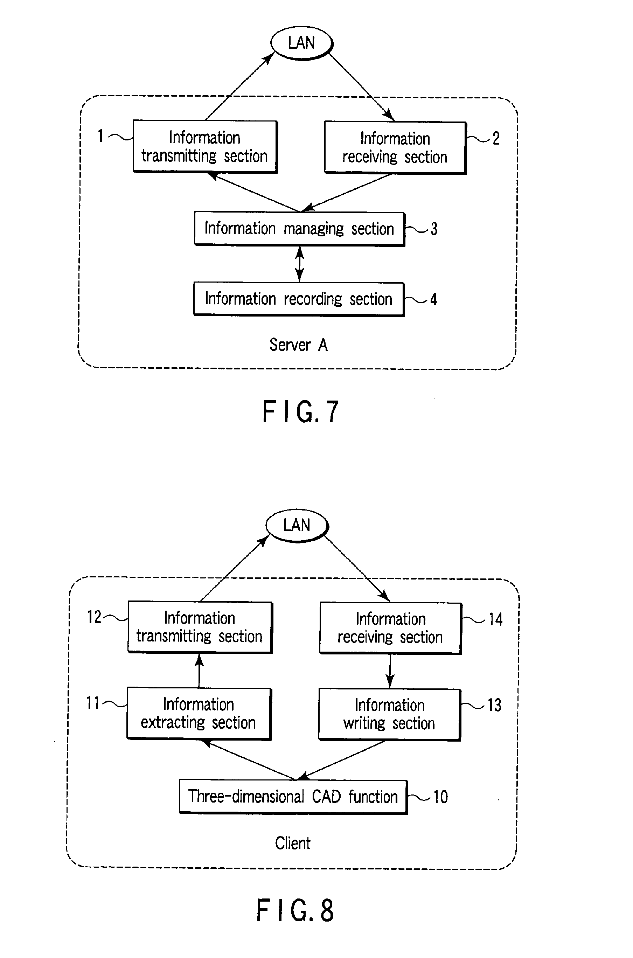

FIG. 7 is a block diagram showing a functional configuration of the server according to the first embodiment of the present invention.

As shown in this figure, the server A includes an information transmitting section 1, an information receiving section 2, an information managing section 3, and an information recording section 4.

The information receiving section 2 has a function of receiving information from the clients B, C, and D.

The information managing section 3 has a function of passing the information received by the information receiving section 2, to the information recording section 4 and a function of passing the same information to the information transmitting section 1.

The information recording section 4 has a function of recording the information passed by the information managing section 3.

The information transmitting section 1 has a function of transmitting the information received from the information managing section 3, to the clients B, C, D, ....

FIG. 8 is a block diagram showing a functional configuration of the client according to the first embodiment.

As shown in this figure, each of the clients B, C, D, ... includes a three-dimensional CAD function 10, an information extracting section 11, an information transmitting section 12, an information writing section 13, and an information receiving section 14.

The three-dimensional CAD function 10 corresponds to three-dimensional software and is used to create a three-dimensional model on the screen of the display device on the basis of CAD. The three-dimensional CAD function 10 includes the previously described notification function.

The information extracting section 11 has a function of extracting information present on CAD.

The information transmitting section 12 has a function of transmitting the information extracted by the information extracting section 11, to the server A.

The information receiving section 14 has a function of receiving information from the server.

The information writing section 13 has a function of writing the information received by the information receiving section 14, in a recording area of the three-dimensional CAD function 10.

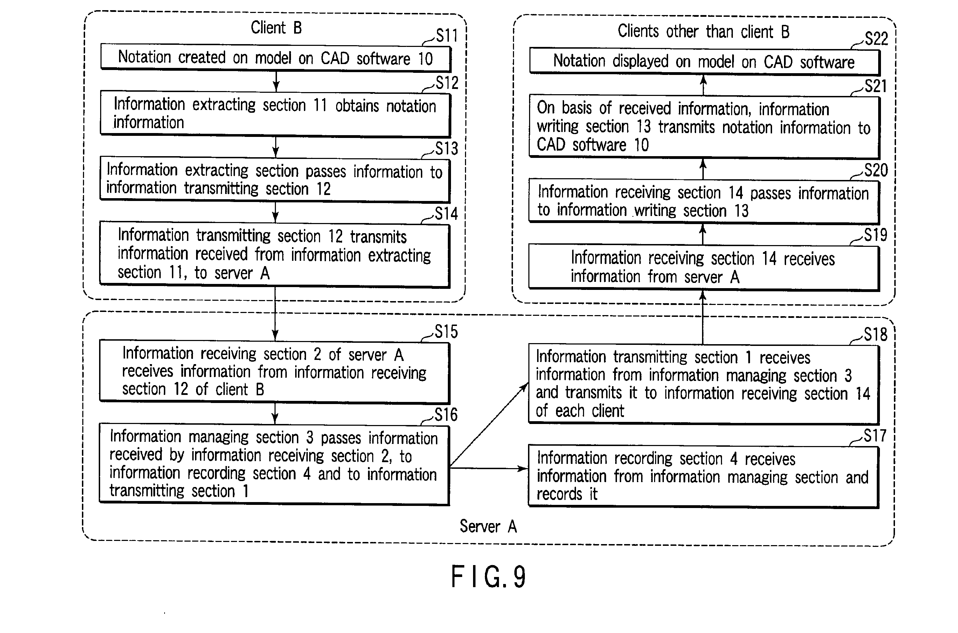

Now, with reference to FIG. 9, description will be given of operations of a communication system according to the first embodiment.

In this description, a shared CAD file is open on the screens of a plurality of clients. The clients exchange notification information with one another in real time (a synchronous process).

For example, on the three-dimensional CAD function (CAD software) 10 of the client B, a notation is created on a model (step S11). Then, the information extracting section 11 obtains notation information (step S12). The information extracting section 11 passes the information to the information transmitting section 12 (step S13). Then, the information transmitting section 12 transmits the information received from the information extracting section 11, to the server A (step S14).

In the server A, the information receiving section 2 receives the information from the information transmitting section 12 of the client B (step S15). The information managing section 3 passes the information received by the information receiving section 2, to the information recording section 4 (step S16). Then, the information recording section 4 receives the information from the information managing section 3 and records it (step S17). Further, the information transmitting section 1 receives the information from the information managing section 3 and transmits it to the information receiving section 14 of each of the clients (step S18).

In the clients other than the client B, the information receiving section 14 receives the information from the server A (step S19). The information receiving section 14 then passes the information to the information writing section 13 (step S20). On the basis of the received information, the information writing section 13 transmits the notation to the three-dimensional CAD function (CAD software) 10 (step S21). Then, the notation is displayed on a model on the three-dimensional CAD function (CAD software) 10 (step S22).

Thus, according to the first embodiment, while a shared CAD file is open on a plurality of clients, information on a notation created on the CAD screen of an arbitrary client can be displayed on the CAD screens of the other clients in real time.

### <Second Embodiment>

The configuration of a communication system according to a second embodiment of the present invention is the same as that in the first embodiment (FIG. 6). Accordingly, its description is omitted. In the second embodiment, the apparatuses exchange more specific notation information with one another than in the first embodiment, described previously.

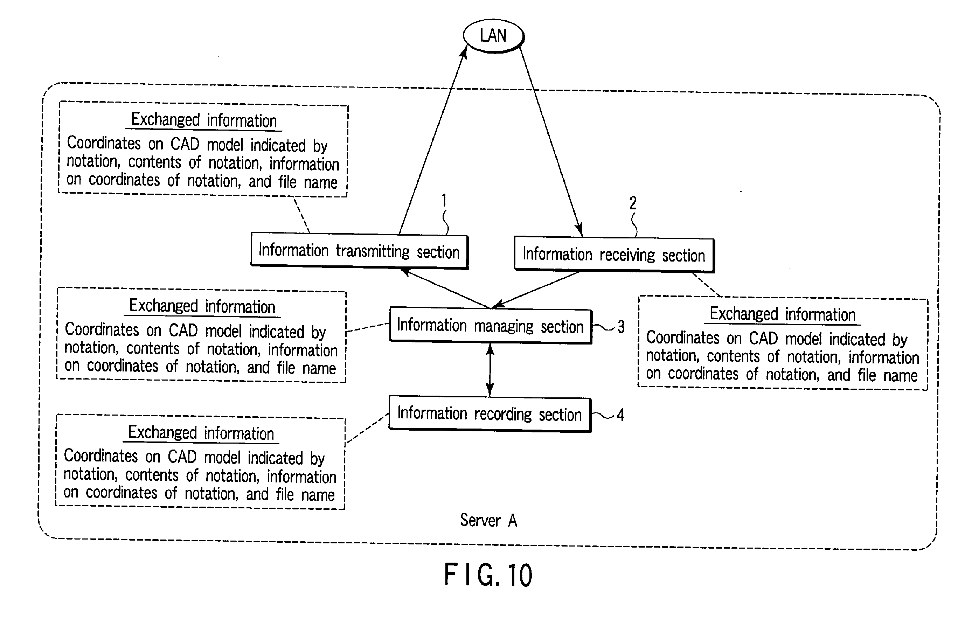

FIG. 10 is a block diagram showing a functional configuration of the server according to the second embodiment of the present invention.

As shown in this figure, the server A includes the information transmitting section 1, the information receiving section 2, the information managing section 3, and the information recording section 4. In this point, the second embodiment is similar to that in the first embodiment (FIG. 7). However, notification information exchanged between the functions includes the "coordinates of a position on a CAD model to be indicated by a notation", the "contents of the notation", the "coordinates of the position of the notation", and a "file name".

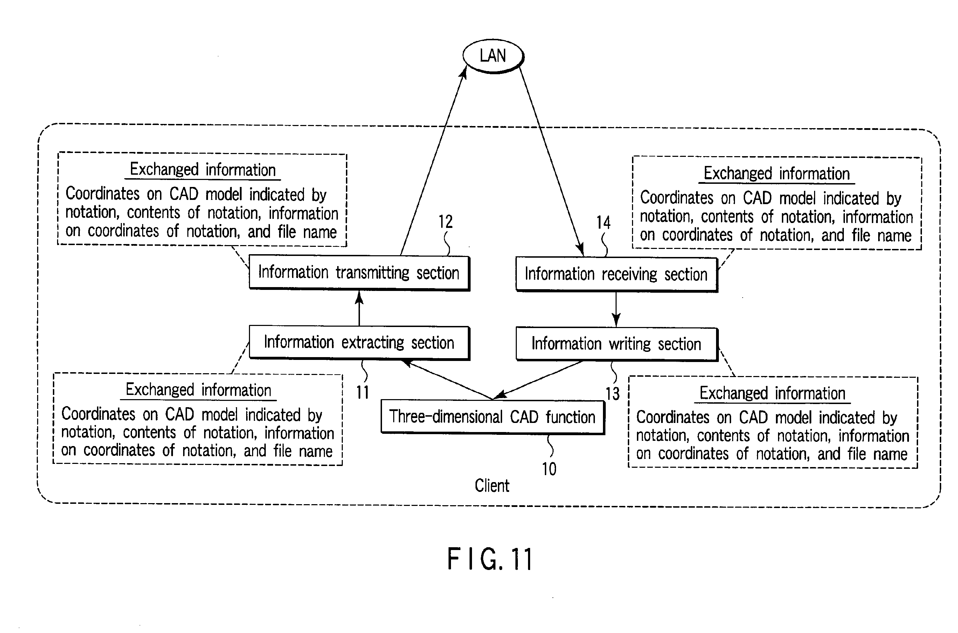

FIG. 11 is a block diagram showing a functional configuration of the client according to the second embodiment.

As shown in this figure, each of the clients B, C, D, ... includes the three-dimensional CAD function 10, the information extracting section 11, the information transmitting section 12, the information writing section 13, and the information receiving section 14. In this point, the second embodiment is similar to that in the first embodiment (FIG. 8). However, notification information exchanged between the functions includes the "coordinates of a position on a CAD model to be indicated by the notation", the "contents of the notation", the "coordinates of the position of the notation", and a "file name".

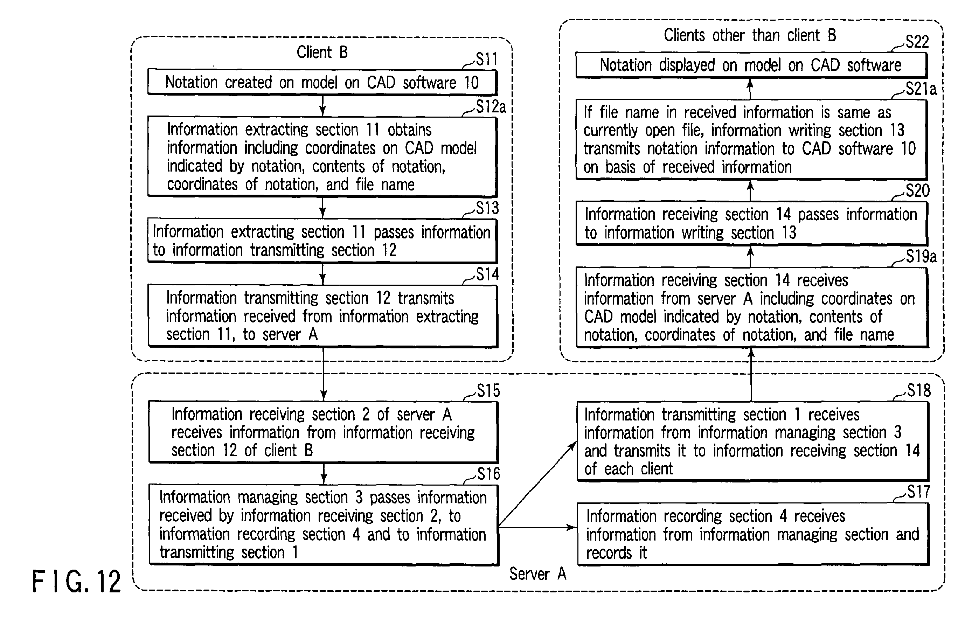

Now, with reference to FIG. 12, description will be given of operations of the communication system according to the second embodiment.

In this description, a shared CAD file is open on the screens of a plurality of clients. The clients exchange notification information with one another in real time (a synchronous process).

For example, on the three-dimensional CAD function (CAD software) 10 of the client B, a notation is created on a model (step S11). Then, the information extracting section 11 obtains notation information (the "coordinates of a position on a CAD model to be indicated by a notation", the "contents of the notation", the "coordinates of the position of the notation", and a "file name") (step S12a). The information extracting section 11 passes the information to the information transmitting section 12 (step S13). Then, the information transmitting section 12 transmits the information received from the information extracting section 11, to the server A (step S14).

In the server A, the information receiving section 2 receives the information from the information transmitting section 12 of the client B (step S15). The information managing section 3 passes the information received by the information receiving section 2, to the information recording section 4 (step S16). Then, the information recording section 4 receives the information from the information managing section 3 and records it (step S17). Further, the information transmitting section 1 receives the information from the information managing section 3 and transmits it to the information receiving section 14 of each of the clients (step S18).

In the clients other than the client B, the information receiving section 14 receives the information (the "coordinates of a position on a CAD model to be indicated by the notation", the "contents of the notation", the "coordinates of the position of the notation", and the "file name") from the server A (step 19a). The information receiving section 14 then passes the information to the information writing section 13 (step S20). If the file name indicated by the received information is the same as that of the currently open file, the information writing section 13 transmits the notation to the three-dimensional CAD function (CAD software) 10 on the basis of the received information (step S21a). Then, the notation is displayed on a model on the three-dimensional CAD function (CAD software) 10 (step S22).

Thus, according to the second embodiment, a notation can be reliably communicated with a small amount of information by employing as notation information the "coordinates of a position on a CAD model to be indicated by the notation", the "contents of the notation", the "coordinates of the position of the notation", and a "file name".

### <Third Embodiment>

The configuration of a communication system according to a third embodiment of the present invention is the same as those in the first and embodiments (FIG. 6). Accordingly, its description is omitted. In the third embodiment, notation information exchanged between the apparatuses includes new items.

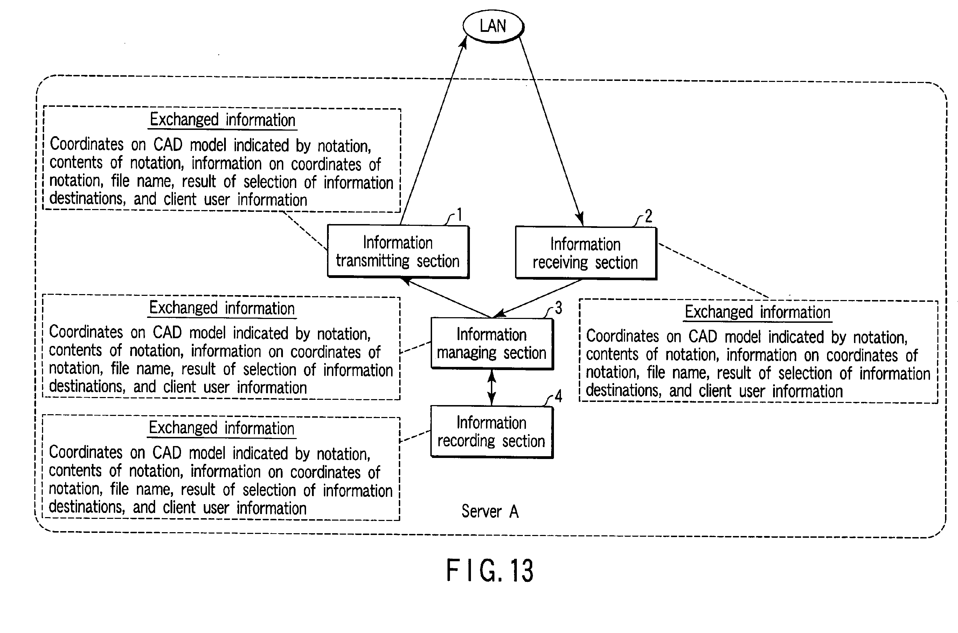

FIG. 13 is a block diagram showing a functional configuration of the server according to the third embodiment of the present invention.

As shown in this figure, the server A includes the information transmitting section 1, the information receiving section 2, the information managing section 3, and the information recording section 4. Further, notification information exchanged between the functions includes the "coordinates of a position on a CAD model to be indicated by a notation", the "contents of the notation", the "coordinates of the position of the notation", and a "file name". In these points, the third embodiment is similar to the second embodiment (FIG. 10). However, in addition to the above items, the notification information exchanged between the functions includes the "result of selection of an information destination" and "client user information".

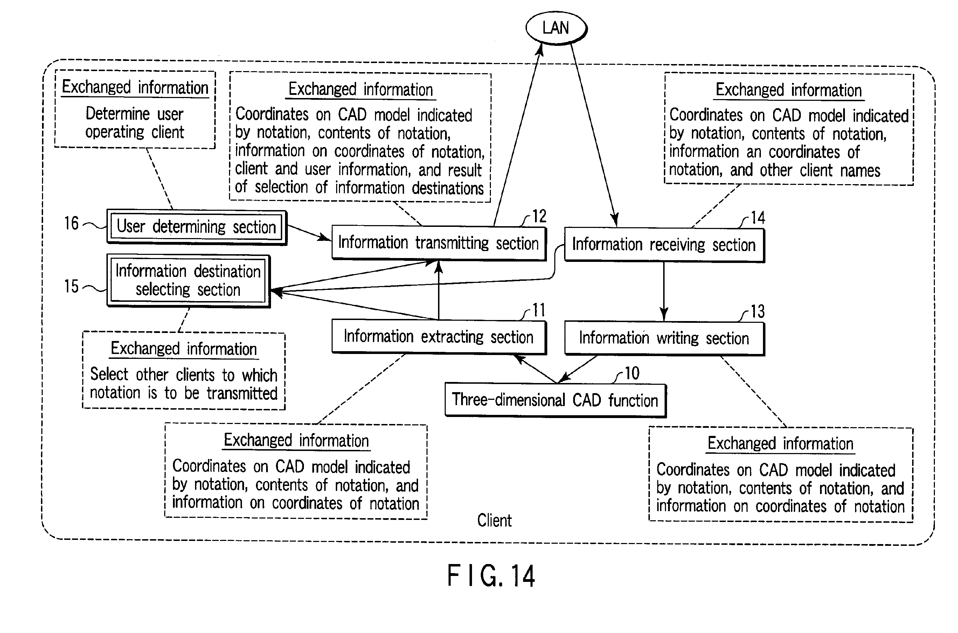

FIG. 14 is a block diagram showing a functional configuration of the client according to the third embodiment.

As shown in this figure, each of the clients B, C, D, ... includes the three-dimensional CAD function 10, the information extracting section 11, the information transmitting section 12, the information writing section 13, and the information receiving section 14. Further, notation information exchanged between the functions includes the "coordinates of a position on a CAD model to be indicated by a notation", the "contents of the notation", and the "coordinates of the position of the notation". In these points, the third embodiment is similar to the second embodiment (FIG. 11). However, in addition to these functions, each client includes an information destination selecting section 15 and a user determining section 16.

The information destination selecting section 15 has a function of selecting one of the clients to which information extracted by the information extracting section 11 is to be transmitted and passing information indicative of this client to the information transmitting section 12.

The user determining section 16 has a function of determining a user who operates the client and passing user information indicative of this user to the information transmitting section 12.

In this case, the information transmitting section 12 transmits information containing "client information and user information" and the "result of selection of an information destination" in addition to the "coordinates of a position on a CAD model to be indicated by a notation", the "contents of the notation", and the "coordinates of the position of the notation". Further, the information receiving section 14 can obtain the information "another client name" in addition to the "coordinates of a position on a CAD model to be indicated by the notation", the "contents of the notation", and the "coordinates of the position of the notation".

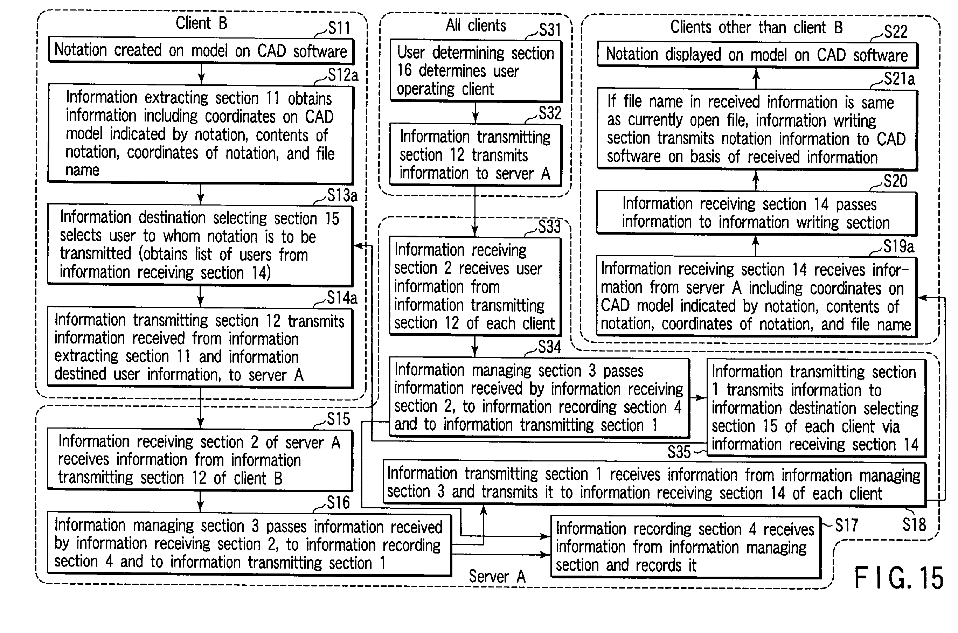

Now, with reference to FIG. 15, description will be given of operations of the communication system according to the third embodiment.

In this description, a shared CAD file is open on the screens of a plurality of clients. The clients exchange notification information with one another in real time (a synchronous process).

In each of the clients, the user determining section 16 determines a user who uses that client (step S31). The information transmitting section 12 transmits user information indicative of the result of the determination to the server A (step S32).

In the server A, the information receiving section 2 receives the user information from the information transmitting section 12 of each client (step S33). The information managing section 3 passes the information received by the information receiving section 2, to both the information recording section 4 and the information transmitting section 1 (step S34). The information transmitting section 1 transmits the passed information to the information destination selecting sections 15 of all the clients via the information receiving section 14 (step S35).

Here, for example, on the three-dimensional CAD function (CAD software) 10 of the client B, a notation is created on a model (step S11). Then, the information extracting section 11 obtains notation information (the "coordinates of a position on a CAD model to be indicated by the notation", the "contents of the notation", the "coordinates of the position of the notation", and a "file name") (step S12a). The information destination selecting section 15 obtains a list of users from the information receiving section 14 to select a use to whom the notation is to be transmitted (step S13a). Then, the information transmitting section 12 transmits the information received from the information extracting section 11, the user information indicative of the information destination, and other information, to the server A (step S14a).

In the server A, the information receiving section 2 receives the information from the information transmitting section 12 of the client B (step S15). The information managing section 3 passes the information received by the information receiving section 2, to the information recording section 4 (step S16). Then, the information recording section 4 receives the information from the information managing section 3 and records it (step S17). Further, the information transmitting section 1 receives the information from the information managing section 3 and transmits it to the information receiving section 14 of each of the clients (step S18).

In the clients other than the client B, the information receiving section 14 receives the information (the "coordinates of a position on a CAD model to be indicated by the notation", the "contents of the notation", the "coordinates of the position of the notation", and the "file name") from the server A (step 19a). The information receiving section 14 then passes the information to the information writing section 13 (step S20). If the file name indicated by the received information is the same as that of the currently open file, the information writing section 13 transmits the notation to the three-dimensional CAD function (CAD software) 10 on the basis of the received information (step S21a). Then, the notation is displayed on a model on the three-dimensional CAD function (CAD software) 10 (step S22).

Thus, according to the third embodiment, notation information can be reliably communicated to one or more particular client apparatuses by determining users who operates the respective clients and executing a process of selecting clients to which information is to be transmitted.

### <Fourth Embodiment>

The configuration of a communication system according to a fourth embodiment of the present invention is the same as those in previously described embodiments (FIG. 6). Accordingly, its description is omitted. In the fourth embodiment, description will be given of a method that can deal not only with a synchronous process by which notation information is exchanged in real time but also with an asynchronous process by which notation information is exchanged in a delaying manner. This method is applicable to the previously described embodiments.

In the fourth embodiment, each client has the following function: when the server A transmits a notation to each client, if the client is not opening the corresponding file (an asynchronous state), the client inquires of the server A upon opening this file, to obtain the notation from the server A, and then displays the notation on a screen for this file.

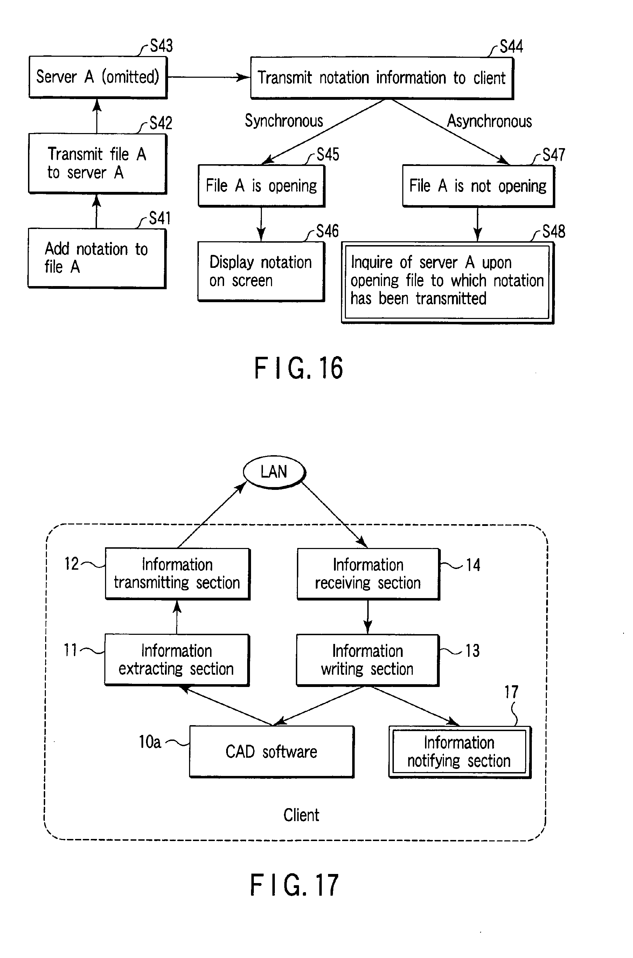

Now, with reference to FIG. 16, description will be given of operations of the communication system according to the fourth embodiment.

For example, the client B notates a file A (step S41. The client B then transmits the notated file A to the server A (step S42).

The server A executes such a process as described in the previously described embodiments (step S43). The server A then transmits notation information to the relevant client apparatuses (step S44).

Each client displays the notation on its screen if it is opening the file A (a synchronous state) when the server A transmits the notation to the client (steps S45 and S46). On the other hand, if the client is not opening the file A (an asynchronous state) when the server A transmits the notation to the client, it inquires, upon opening the file A, of the server A as to whether or not notation information has newly arrived at the server A (steps S47 and S48). This inquiry allows the client to obtain the notation from the server and display it on its screen.

Thus, according to the fourth embodiment, when the server transmits a notation to each client, even if the client is not opening the corresponding file (an asynchronous state), the client can reliably display the notation on its screen upon opening this file.

### <Fifth Embodiment>

The configuration of a communication system according to a fifth embodiment of the present invention is the same as those in previously described embodiments (FIG. 6). Accordingly, its description is omitted. In the fifth embodiment, description will be given of a method of allowing the user to notice the new arrival of notation information on the screen of the information destined client. This method is applicable to the previously described embodiments.

FIG. 17 is a block diagram showing a functional configuration of the client according to the fifth embodiment of the present invention.

As shown in this figure, each of the clients B, C, D, ... includes an information notifying section 17 in addition to the functions described in the previously described embodiments. The information notifying section 17 has a function of operating when the server A transmits notation information to the client, to display an icon or the like on the screen of the client to notify the user of the new arrival of notation information.

Specifically, if the receiving client is opening the same file, the notation is displayed on the CAD screen of the CAD software 10a and an icon or the like is displayed at a predetermined position on the screen to notify the user of the new arrival of a notation. On the other hand, even if the receiving client is not opening the same file, the new arrival of notation information is displayed at the predetermined position on the screen to prompt the user to open the corresponding file.

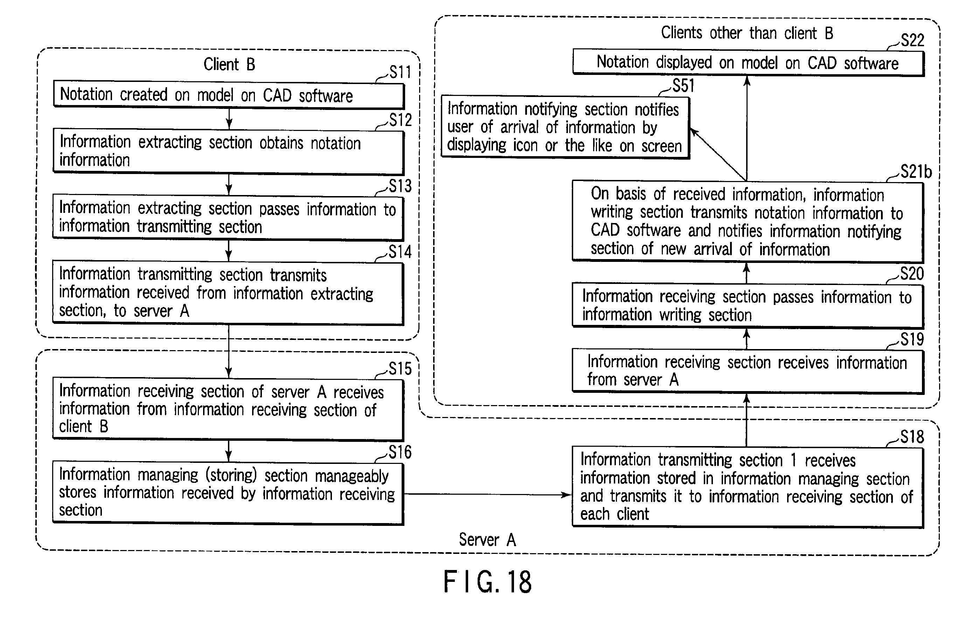

Now, with reference to FIG. 18, description will be given of operations of the communication system according to the fifth embodiment.

Processes executed by the server A and client B are similar to those in the previously described embodiments (FIG. 9 and other figures). Accordingly, their description is omitted.

In the clients other than the client B, the information receiving section 14 receives information from the server A (step S19). The information receiving section 14 then passes the information to the information writing section 13 (step S20). On the basis of the received information, the information writing section 13 transmits the notation to the three-dimensional CAD function (CAD software) 10 and informs the information notifying section 17 of the new arrival of information (step S21b). Then, the information notifying section 17 notifies the user of the new arrival of information on the screen using the icon or the like. At the same time, the notation is displayed on a model on the three-dimensional CAD function (CAD software) 10 (step S22).

Thus, according to the fifth embodiment, it is possible to reflect notation information in the client's CAD software, while notifying the user of the new arrival of this information.

### <Sixth Embodiment>

The configuration of a communication system according to a sixth embodiment of the present invention is the same as those in previously described embodiments (FIG. 6). Accordingly, its description is omitted. In the sixth embodiment, description will be given of a method of combining the previously described fourth and fifth embodiments to allow the user to notice the new arrival of notation information upon powering on the client. This method is applicable to the previously described embodiments.

In the sixth embodiment, after being powered on to activate the system, the client inquires of the server A as to whether or not corresponding notation information has been newly arrived. Then, if corresponding notation information has been newly arrived, the client displays the arrival on its screen.

Thus, according to the sixth embodiment, after powering on the client to activate the system, the user can notice the new arrival of notation information.

### <Seventh Embodiment>

The configuration of a communication system according to a seventh embodiment of the present invention is the same as those in previously described embodiments (FIG. 6). Accordingly, its description is omitted. In the seventh embodiment, a different method is used to transmit notation information to an information destined client or notify it of the new arrival of notation information. This method is applicable to the previously described embodiments.

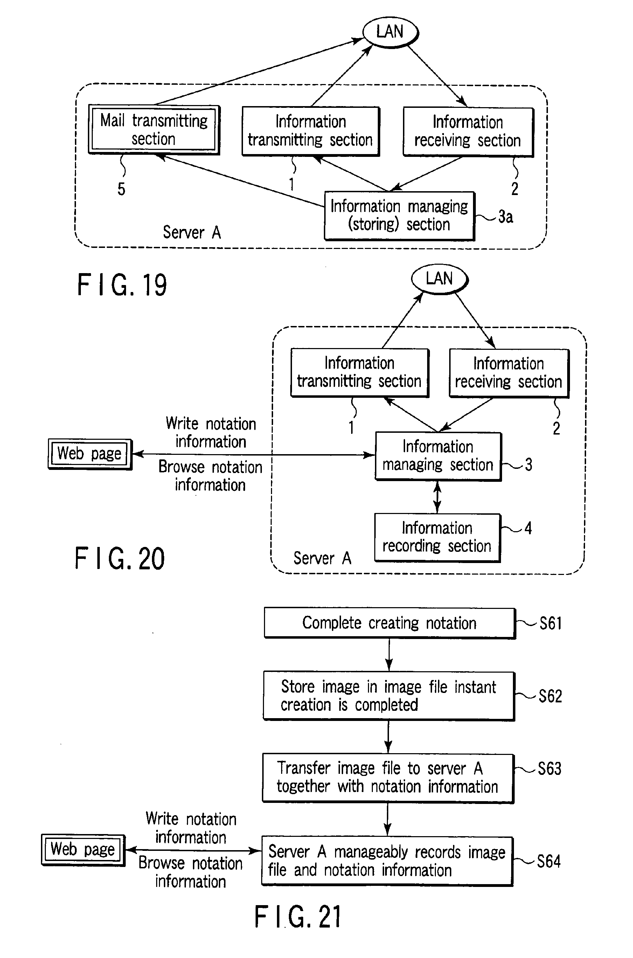

FIG. 19 is a block diagram showing a functional configuration of the client according to a seventh embodiment.

As shown in this figure, the server A includes a mail transmitting section 5 in addition to the functions described in the previously described embodiments. When transmitting notation information to an information destined client, the mail transmitting section 5 uses an electronic mail to transmit the notation information or notify the client of the new arrival of notation information.

Thus, according to the seventh embodiment, the user can notice the new arrival of notation information or obtain notation information, via an electronic mail.

### <Eighth Embodiment>

The configuration of a communication system according to an eighth embodiment of the present invention is the same as those in previously described embodiments (FIG. 6). Accordingly, its description is omitted. In the eighth embodiment, description will be given of a method of managing notation information utilizing a Web page. This method is applicable to the previously described embodiments.

FIG. 20 is a block diagram showing the relationship between the server and a Web page according to the eighth embodiment of the present invention.

When the user creates a notation through a Web page, the notation information is transmitted to the information managing section 3 of the server A and stored in the information storing section 4. Further, the notation information is transmitted from the information managing section 3 to the relevant client via the information transmitting section 1. Consequently, the notation information is displayed on the screen of the client.

Further, when the information managing section 3 of the server A is accessed through the Web server, the notation information recorded in the information recording section 4 can be referenced (browsed).

Thus, according to the eighth embodiment, it is possible to create a notation to record the corresponding information or reference this information, via a Web page.

### <Ninth Embodiment>

The configuration of a communication system according to a ninth embodiment of the present invention is the same as those in previously described embodiments (FIG. 6). Accordingly, its description is omitted. In the ninth embodiment, description will be given of a method of enabling not only the reference of notation information but also the browsing of an image containing a notation. This method is applicable to the previously described embodiments.

FIG. 21 is a chart showing a process procedure according to the ninth embodiment of the present invention.

Using an arbitrary client, the user creates a notation on a CAD file screen (step S61). The instant the creation of the notation is completed, an image containing the notation is stored in an image file (step S62). The image file containing the image is transferred to the server A together with the notation information (step S63). The image file is then managed by the server A (step S64).

Subsequently, by accessing the server A through a Web page, the image and notation information recorded in the server A can be referenced (browsed).

Thus, according to the ninth embodiment, it is possible to reference not only notation information but also an image containing a notation, through a Web page.

### <Tenth Embodiment>

The configuration of a communication system according to a tenth embodiment of the present invention is the same as those in previously described embodiments (FIG. 6). Accordingly, its description is omitted. In the tenth embodiment, description will be given of a method of indicating whether or not a task indicated by a notation has been completed. This method is applicable to the previously described embodiments.

In the tenth embodiment, it is possible to use a layer function provided in CAD software to switch between the display and non-display of a notation to indicate whether or not a task indicated by the notation has been completed.

Further, the server apparatus stores information indicating the display or non-display of a notation. In this case, the server apparatus may store the information indicating the display or non-display of the notation in associated with the notation information so that these pieces of information can be browsed or displayed.

Once the task is completed, the information indicating the non-display of the notation is transmitted to the destined client via the server A.

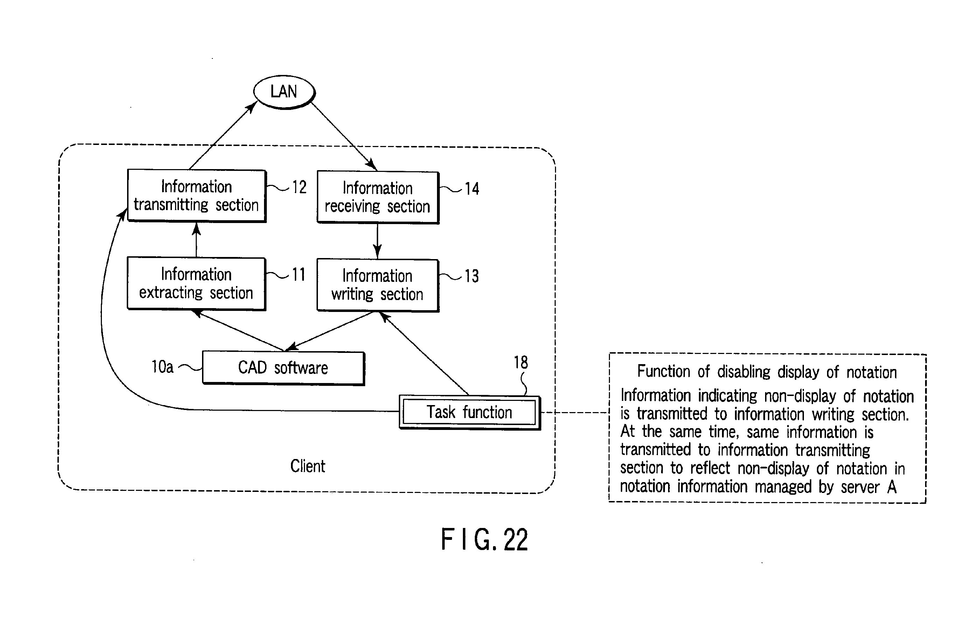

FIG. 22 is a block diagram showing a functional configuration of the client according to a tenth embodiment of the present invention.

As shown in this figure, each of the clients B, C, D, ... includes a task function 18 in addition to the functions described in the previously described embodiments. The task function 18 executes a process of disabling the display of a notation on the screen when a task indicated by the notation is completed. The task function 18 also transmits the information indicating the non-display to the information writing section 13 and uses the information transmitting section 12 to reflect this information in information managed by the server A.

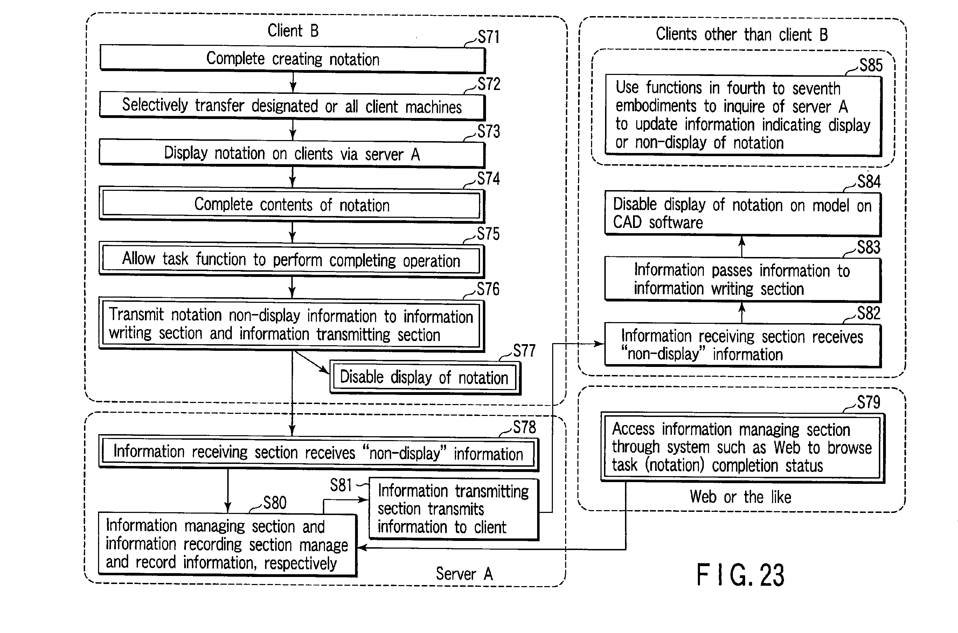

FIG. 23 is a flowchart illustrating operations of the communication system according to the tenth embodiment.

In the client B, a notation is completely created (step S71). The notation information is selectively transferred to designated or all clients (step S72). Further, the notation is displayed on the relevant clients via the server A (step S73). The user completes the contents of the notation (a change in a design or the like) (step S74). Then, the task function 18 performs a completing operation (step S75). Thus, the information writing section 13 writes the information indicating the non-display of the notation, and the information transmitting section 12 transmits the same information (step S76). Further, the display of the notation is disabled (step S77).

In the server A, the information receiving section 2 receives the information indicating the non-display of the notation (step S78). The information managing section 3 records this information in the information recording section 4 for management (step S80). By accessing the information managing section 3 through the Web or the like, the managed information can be browsed to determine whether or not the notation as a task has been completed (step S79). Further, the information transmitting section 1 transmits the information indicating the non-display of the notation, to the clients other than the client B (step S81).

In the clients other than the client B, the information receiving section 14 receives the information indicating the non-display of the notation (step S82). The information receiving section 14 then passes the information to the information writing section 13 (step S83). Thus, the task function 18 disables the display of the designated notation on a model on CAD software (step S84). Subsequently, the client inquires of the server A about the notation completion or non-completion status to update the information indicating the display or non-display of a notation (step S85).

Thus, according to the tenth embodiment, when a task indicated by a notation has not been started or is under way, the notation is displayed. However, when the task is completed, the display of the notation is disabled. This allows the user to determine that only the task being displayed remains to be processed. Further, by transmitting information indicating the non-display of a notation, the server A can manage the corresponding information and this information can be reflected in the other clients. Further, as shown in FIG. 20, accessing the server from a Web page enables information stored in the server A to be browsed. In this case, even users who are not engaged with the CAD task can reference this information.

The present invention is not limited to the above described embodiments. However, variations may be made to these embodiments without departing from the spirits of the invention. For example, the process procedures described in the embodiments may be implemented as programs that can be read and executed by a computer.

As described above, according to the present invention, design change information or the like can be efficiently exchanged between a plurality of client apparatuses individually having CAD software.

## Claims

1. An information communication method applied to a communication system in which a plurality of client apparatuses individually having computer aided design (CAD) software are connected via a network to a server apparatus managing information, the method comprising:
transmitting notation information related to a notation created on a CAD file screen of an arbitrary client apparatus, to the server apparatus (S1 to S4);
recording the notation information transmitted to the server apparatus, on a recording medium and transmitting the notation information to one or more client apparatuses as destinations of the notation information (S15 to S18);
displaying the notation information transmitted to each client apparatus as the destinations, on a CAD file screen of each client apparatus as the destinations (S19 to S22).

2. The information communication method according to claim 1, **characterized in that** the notation information includes contents of the notation, coordinates of a position of the notation, and coordinates of a position indicated by the notation (S12a, S19a).

3. The information communication method according to claim 1, **characterized by** further comprising adding information indicating the destinations of the notation information, to the notation information to be transmitted to the server apparatus (S13a, S14a).

4. The information communication method according to claim 1, **characterized in that** upon opening an CAD file, each client apparatus inquires of the server apparatus as to whether corresponding notation information has newly arrived, to obtain the notation, and then displays the notation on the CAD file screen (S48).

5. The information communication method according to claim 1, **characterized by** further comprising displaying information indicating that corresponding notation information has newly arrived, on a screen of each client apparatus (S51).

6. The information communication method according to claim 1, **characterized in that** after being powered on to activate a system, each client apparatus inquires of the server apparatus as to whether or not corresponding notation information has newly arrived, and if the corresponding notation information has newly arrived, displays the arrival on a screen.

7. The information communication method according to claim 1, **characterized by** further comprising notifying each client apparatus as the destinations of new arrival of the notation information via an electronic mail.

8. The information communication method according to claim 1, **characterized by** further comprising:
recording information on a notation created through a Web page, in the server apparatus and transmitting the notation information to each client apparatus as the destinations; and
enabling the notation information recorded in the server apparatus to be referred by accessing the server apparatus through the Web page.

9. The information communication method according to claim 1, **characterized by** further comprising:
transmitting an image containing a notation creased on the CAD file screen of an arbitrary client apparatus, to the server apparatus together with information on the notation to manage the image and the notation information by the server apparatus (S61 to S64); and
enabling the image and notation information recorded in the server apparatus to be referenced by accessing the server apparatus through the Web page.

10. The information communication method according to claim 1, **characterized by** further comprising using a layer function provided in the CAD software to switch between display and non-display of the notation to indicate whether or not a task indicated by the notation has been completed (S71 to S85).

11. The information communication method according to claim 10, **characterized by** further comprising transmitting information indicating the non-display of the notation, to each client apparatus when the task is completed (S71 to S85).

12. The information communication method according to claim 10, **characterized by** further comprising storing information indicating the display or non-display of the notation, in the server apparatus.

13. The information communication method according to claim 1, **characterized by** further comprising:
storing the information indicating the display or non-display of the notation, in the server apparatus in association with the notation information (S80); and
enabling the information stored in the server apparatus to be browsed or referenced (S79).

14. A communication system comprising:
a plurality of client apparatuses (B, C, ...) individually having computer aided design (CAD) software;
a server apparatus (A) managing information; and
a network connecting the plurality of client apparatuses and the server, wherein
each of the plurality of client apparatuses (B, C, ...) comprises means (10 to 12) for transmitting notation information related to a notation created on a CAD file screen to the server apparatus and means (14, 13, 10) for displaying, on the CAD file screen, the notation information transmitted from the server apparatus (A), and
the server apparatus (A) comprises means (1 to 4) for recording the notation information transmitted by an arbitrary client apparatus, on a recording medium and transmitting the notation information to one or more client apparatuses as destinations of the notation information.

15. The communication system according to claim 14, **characterized in that** the notation information includes contents of the notation, coordinates of a position of the notation, and coordinates of a position indicated by the notation.

16. A client apparatus (one of B, C, ...) having computer aided design (CAD) software and which can transmit and receive information to and from another client via a server apparatus (A), the apparatus comprising:
means (10 to 12) for transmitting notation information related to a notation created on a CAD file screen to one or more client apparatuses as destinations of the notation information via the server apparatus (A); and
means (14, 13, 10) for displaying, on the CAD file screen, the notation information transmitted from an arbitrary client apparatus via the server apparatus.

17. The client apparatus according to claim 16, **characterized in that** the notation information includes contents of the notation, coordinates of a position of the notation, and coordinates of a position indicated by the notation.
